# EUROPEAN PATENT APPLICATION

(11) **EP 1 339 249 A2**
(43) Date of publication of application: **27.08.2003**
(21) Application number: 03250572.9
(22) Date of filing: 30.01.2003
(51) Int. Cl.: H04Q 7/32

(54) **System and method for configuring electronic devices**

(30) Priority: 19.02.2002 US 78618
(71) Applicant: Hewlett-Packard Company, Palo Alto, CA 94304 (US)
(72) Inventor: Shackleford, Barry J., Portola Valley, California 94028 (US)
(74) Representative: Jehan, Robert

(57) **Abstract**

A method for a user to program an electronic system not having a QWERTY keypad. A user-generated electronic mail message is originated via a remote keypad (110, 210). The electronic mail message includes user-selected preference data, and is communicated to an electronic mail destination (126, 226). The user-selected preference data is automatically extracted from the electronic mail message, transmitted to the electronic system (150, 280), and used to configure the electronic system.

## Description

The present invention generally relates to a method for configuring an electronic system and, preferably, to a method for configuring user-selected preference data in an electronic system that does not have a QWERTY keypad.

A variety of electronic systems include user-programmable features. Examples of such electronic systems include portable telephones, televisions, radios, media players, audio and video recorders, and other consumer electronic devices, alone or in combination. A user is able to maximize utility of the electronic system through customized operation according to their preferences, for example by programming a video recorder to start and stop recording a selected channel atparticular times, or by storing names and associated telephone numbers entries in an electronic directory within a wireless telephone. Thereafter, the user attains increased electronic system utility by configuring the telephone for "speed-dialing" stored telephone numbers, activated by recalling an easier-to-remember name from the directory.

Many electronic systems include an interface for entering user-selected data. The interface typically includes one or more buttons (*e.g*., a non-QWERTY keypad), levers and/or dials. QWERTY refers to the q, w, e, r, t, and y keys at the upper left of a typewriter, and a QWERTY keypad is a keypad having an arrangement of alphabetical and numerical keys found on a traditional typewriter. While a computer keyboard may have additional keys and/or some keys may include additional optional functionality, a computer keyboard is generally considered to be a QWERTY keypad.

Customizing an electronic system is generally an infrequent task, accomplished initially during set-up and perhaps later if changes are desired, or due to a subsequent loss of settings *e.g.,* due to a power failure. Since entry of user-selected preference data, including alpha-numeric text, is an infrequent task, electronic system keypads are conventionally not designed to facilitate easy entry of such data.

Entry of non-routine alpha-numeric data using a non-QWERTY keypad is often a clumsy and laborious process. Navigating a menu for selecting user-definable operating parameters can also be clumsy, slow and frustrating. Electronic system keypad interfaces are designed considering a variety of conflicting parameters such as keypad size versus range of functionality, or appearance versus ease of use. Therefore, certain economies are taken in the implementation of the interface by which user-selected data is entered. Commonly, interfaces are designed such that the most frequently accessed functions are easiest to find and use, for example powering the electronic system on and off, changing channels on a television receiver, or dialing a telephone number into a telephone device.

Functions accessed less often are more difficult to enter. For example, entering the text portion of an electronic telephone directory entry in a wireless telephone memory is an operation that is performed infrequently. The wireless telephone may require depressing one or more function keys to enter an alphabetic entry mode, then perhaps the numeric keys used for dialing are repeatedly depressed until one of several represented letters appears in a display. Depressing another directional key may be required to advance a cursor to a new character position in the display. The process is far less efficient than typing upon a QWERTY keypad, where depressing each key uniquely enters a specific character and advances the cursor to the next character position.

The present invention seeks to provide an improved method and system for providing user-preference data to an electronic system.

According to an aspect of the present invention there is provide a method as specified in claim 1.

According to another aspect of the present invention there is provided a method of providing user-preference data as specified in claim 1.

According to another aspect of the present invention there is provided an electronic system as specified in claim 9 or 10.

In one example embodiment of the present invention, a method is provided for a user of an electronic system that does not have a QWERTY keypad to program the electronic system. A user-generated electronic mail message is originated via a remote keypad. The electronic mail messages includes user-selected preference data, and is communicated to an electronic mail destination. The user-selected preference data is automatically extracted from the electronic mail message and transmitted to the electronic system over a communication network external to the electronic mail destination. The electronic system is configured with the user-selected preference data.

Embodiments of the present invention are described below, by way of example only, with reference to the drawings, in which:
FIG. 1 is a circuit arrangement for configuring a wireless electronic device, according to an example embodiment of the present invention; and
FIG. 2 is a circuit arrangement for configuring another electronic device, according to another example embodiment of the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention as defined by the appended claims.

Various embodiments of the present invention are described in terms of an arrangement for providing user-preference data to an electronic system that does not have a QWERTY keypad for entry of the data. Those skilled in the art will appreciate that the system could be implemented using other circuit elements and/or adapted to other applications.

According to one general example embodiment of the present invention, a method is provided for a user of an electronic system, the electronic system not having a keypad to program the electronic system. Alternatively, the electronic system includes a non-QWERTY keypad, and is adapted to receive user-selected preference data directly via the non-QWERTY keypad. According to the preferred method, a user-generated electronic mail (e-mail) message is originated via a keypad remote from the electronic system, for example a QWERTY keypad. The e-mail message includes user-selected preference data, and is communicated using e-mail protocol to an e-mail destination that is coupled to the electronic system that is to be configured.

The user-selected preference data is automatically extracted from the e-mail message and transmitted to the electronic system over a communication network, such as a wireless network that modulates a radio frequency signal responsive to the user-selected preference data. The e-mail message may be stored upon receipt in a manner typical for other e-mail communications and the user-selected preference data being automatically extracted responsive to the electronic system (that is to be configured) establishing a temporary communication link with the e-mail destination. Alternatively, extracted user-selected preference data may be stored until forwarded. Thereafter, the electronic system is configured with the user-selected preference data, for example by modifying electronic system operating parameters in response to the user-selected preference data. By virtue of the method of the present invention, entry of user-preference data through an awkward non-QWERTY keypad is bypassed.

According to one example implementation, the electronic system is a mobile communication device (*e.g*., portable telephone, cellular telephone, satellite telephone, etc.), and the user-preference data is the telephone user's personal telephone directory information, either in its entirety or a partial update thereto. The telephone user sends an e-mail message containing the telephone directory information to an address maintained by the manufacturer of the telephone or a wireless service provider. The e-mail message contains the user's portable telephone identifying information and is sent to an e-mail address. Using e-mail as a data transmission means permits a user to electronically copy telephone directory information from a computer-implemented contact directory application into the e-mail message as the user-selected preference data, for example. The e-mail message may be stored in e-mail format, or for example, the user-selected preference data may be extracted from the received e-mail message and stored as at least one telephone directory entry.

According to a further example implementation, the user's portable telephone has an e-mail address uniquely assigned to the user's telephone (e.g., a branch of a voice mail box destination, etc.). To configure the portable telephone, the user calls a telephone number associated with a data transfer function corresponding to the e-mail address, and the portable telephone receives the directory information. According to another implementation, the user calls a common telephone number used to download configuration information to multiple portable telephones, and provides device identification information, either through user action (such as entering a portable telephone identification number, or an account number). Alternatively, the portable telephone equipment can automatically supply its identifying information to the called device as part of establishing the communication link.

According to another general example embodiment of the present invention, the electronic system includes a television receiver and a recording device, such as a VCR, a digital video recorder (*e.g*., TiVo, Microsoft's Ultimate TV, SONICblue's ReplayTV, etc.), DVD or other technology that can be programmed with instructions to record TV transmissions (terrestrial, cable, satellite) by entering instructions, keywords or codes. Typically, these keywords are entered a single character at a time via a remote control. The recording devices are coupled to a telephone line to receive TV program schedules and software updates. To configure the TV recorder, an owner sends an e-mail message including user-selected preference data (*e.g.,* recording/programming instructions/keywords, configuration data, etc.) to a predetermined e-mail address. Information contained in the e-mail message is downloaded to the recorder during an automatically initiated periodic (*e.g.,* weekly or daily) call to a central programmer. The central programmer is managed, for example, by the recorder manufacturer or television service provider. In an alternative implementation, once user-preference data is available at an e-mail destination, a computing device initiates a communication with the electronic system and transmits the user-preference data to the electronic system.

According to other embodiments, information to configure an electronic system, such as the above-described portable telephone or TV recorder, is gathered via a web page interface, saved and downloaded to the system. Whether originating in an e-mail message or through a web page interaction, configuration information may be encrypted, and decrypted for use thereafter by the electronic system.

The preferred method can be used for entry of all electronic system configuration data, the capabilities of a keypad (if any) being limited to operational controls, for example. According to one particular example implementation, the electronic system does not include a keypad at all, and all user-selected preference data and configuration programming is communicated to the electronic system *(e.g.,* portable telephone, TV, TV recorder, telephones, computing devices, or other programmable electronic device) using the method of the present invention through an e-mail or web-initiated communication.

The remainder of this description is drafted with reference to particular example applications, one involving bypassing a non-QWERTY keypad to configure a wireless telephone with telephone number directory information via a wireless link, and another involving bypassing a non-QWERTY keypad of an intelligent television recorder to program the recorder with current television programming information and/or recording instructions determined through a hyperlinked document (*e.g*., a web page) and communicated to the recorded via a hardwired data network interface. It will be appreciated, however, that the invention is not limited to these specific type of devices, types of configuration data, or to electronic systems including a non-QWERTY keypad. The system described is applicable to providing user-selected preference data to an electronic system more efficiently than can be accomplished via an electronic system's keypad. The system is applicable as a remote configuration method, for electronic systems having QWERTY keypads, non-QWERTY keypads, or no local keypads at all.

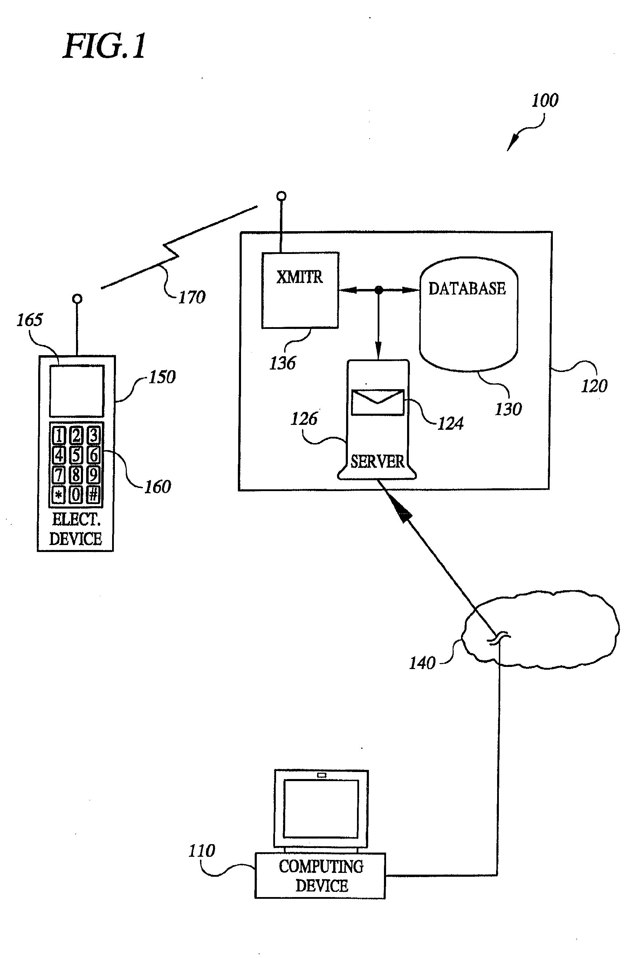

FIG. 1 illustrates one example arrangement 100.

A first computing device 110 is communicatively coupled to a second computing device 120 through a data network 140, such as the Internet, a LAN, a telephone system or wireless communication system for example. Second computing device 120 is adapted to function as an electronic mail (e-mail) destination, having an e-mail application 124 running on a server 126 for example. Server 126 is coupled to a database 130, in which information received via e-mail can be stored and retrieved by server 126. Server 126 and database 130 are also communicatively coupled to a transmitter 136, by which information can be transmitted to a remote electronic system 150 over a wireless link 170. In the example implementation illustrated in FIG. 1, electronic system 150 is a portable telephone communicatively coupled to the second computing device 120 via a cellular telephone wireless network. Alternatively, electronic system 150 may be communicatively coupled to second computing device 120 via other wireless technologies such as radio frequency signals, infra-red signal, digital communication signals or may be couple-able through an intermediate means (not shown).

Electronic system 150 has a non-QWERTY, alpha-numeric keypad user interface 160 for entering user-selected preference data, and optionally, a display 165 for communicating information back to a user. Interface 160 is arranged and configured as a standard telephone keypad in one example implementation.

User-preference data for a portable cellular telephone includes the user's personal telephone directory of names and associated telephone numbers. A user configures the telephone with the user-preference data in order to attain greater utility from the telephone, for example by enabling "speed dialing" from the directory. Each directory entry includes a telephone number and associated name/label. The alpha-numeric data, such as name and telephone information for a cellular telephone, may be entered into the electronic system via a keypad. Because entry of user-preference data is typically an infrequent activity, the keypad facilities dedicated to user-preference data entry are limited, and often cumbersome. Often, each keypad key represents multiple alpha-numeric characters, differentiation requiring multiple keystrokes, for example one push to select a first character for entry, two pushes of the same key to select a different (second) character for entry, etc., and a confirming keystroke, such as an "enter" key to actually enter the selected character. Therefore, entering data through the keypad is laborious and often, frustrating.

It is desirable to bypass, or eliminate, laborious entry of user-preference data through a keypad. According to an example embodiment of method, a user enters user-preference data into the first computing device, for example a personal computer, using a keyboard having greater functionality and/or an easier mode of alpha-numeric character data entry. According to one example application, the user-preference data is packetized as an electronic mail (*i.e*., e-mail) message by an e-mail software application executing on the first computing device. An electronic system identifier associated with the user-preference data is included in the e-mail message.

Subsequently, the e-mail message containing the user-preference data and the electronic system identifier is sent to the second computing arrangement. The second computing device is adapted to function as an electronic mail destination, for example by executing an e-mail software application of a server computing arrangement. According to one example implementation, the electronic system identifier is used to direct the e-mail to a particular e-mail destination address. In other words, each electronic system has a unique e-mail address at the second computing arrangement. According to another example implementation, all e-mail messages are designated to a common e-mail address, differentiation being accomplished by extracting the electronic system identifier from the e-mail message. For example, the "subject" or "Re" portion of the e-mail message, or the first line of the body of the message, or some other predefined configuration is used to associate the electronic system identifier communicated with the e-mail message with the appropriate electronic system. According to another example implementation, each electronic system is predefined to be associated with a user identifier, and e-mail received from the user identifier is thereby associated with a particular associated electronic system. Electronic system identifiers include, for example, the telephone number of a portable telephone, a serial number of a particular device, or some other identifying designator unique to the equipment of the electronic system or service account.

The e-mail message contains user-preference data, for example, a telephone directory, either in its entirety (original installation), or a portion thereof such as a partial update. Data may be delineated be keywords, format, or by other methods compatible with a particular electronic system. The e-mail message, or optionally only the relevant contents thereof, are stored in database 130 after being received by server 126.

The second computing device is communicatively coupled to an electronic system (*e.g*., a portable cellular telephone) through a wireless link. The wireless link is established through one of any number of electromagnetic signal technologies, for example radiofrequency signals carrying digitally-encoded information. To configure the portable telephone with the updated directory data, the user dials the telephone number assigned to a downloading function. The telephone's identifier is either automatically extracted (as is well known for establishing communications between a cellular telephone and a central transceiving station), or is user-provided, for example by entry via the keypad. According to another implementation, the communication is directed to a particular destination associated with the electronic system's information, such as an assigned mailbox. Accessing the downloading function, initiates retrieval of the user-preference data from the database and transmission (over the wireless interface) to the electronic system. Once received, the user-preference data is automatically programmed into the portable telephone, for example by being stored in an appropriate memory designated to store directory information.

Other configuration data may also be included as user-preference data, for example ring mode, dialing instructions, voicemail instructions and information, and other operating information. According to one more particular example implementation, directory information transmitted to the electronic system includes information previously stored in the first computing arrangement, for example the contact directory of a personal computer, thereby reducing the need to re-enter common information.

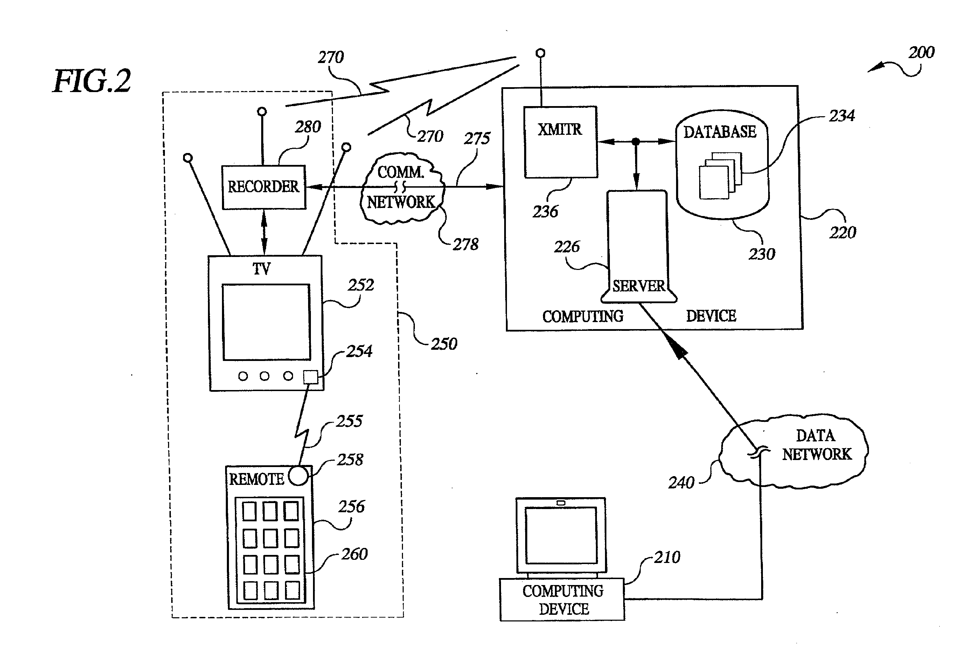

FIG. 2 illustrates another example embodiment of the present invention, including a television recorder 280. A first computing device 210 is communicatively coupled to a second computing device 220 through a data network 240, such as the Internet. Second computing device 220 is adapted to function as hyperlinked document (*i.e*., web page) host, having an a server 226 arranged and configured communicatively interact with the first computing device responsive to a request from the first computing device for information contained by a hyperlinked document served by the second computing device. Server 226 is coupled to a database 230, in which web pages 234 and information received from the first computing device is stored and retrieved.

According to one embodiment, second computing device is communicatively coupled to a remote electronic system 250. According to one example implementation, server 226 and database 230 are communicatively coupled to a transmitter 236, by which information can be transmitted to the remote electronic system 250 over a wireless link 270, via one of several wireless technologies such as radio frequency signals, infra-red signal, satellite, or other digital or analog communication signals. According to another example implementation, the second computing device and the remote electronic device are communicatively coupled via a hard-wired data communication network 278, such as a telephone or cable -based data system. The second computing device and the remote electronic device may be communicatively coupled via more than one communication link.

In the example implementation illustrated in FIG. 2, electronic system 250 is a television arrangement including a recorder 280 communicatively coupled to a television 252, and a remote control device 256 communicatively coupled to one or both of the television 252 and the recorder 280. According to a more-specific example implementation, recorder 280 is periodically communicatively coupled to second computing device 220. Recorder 280 periodically (e.g., weekly) calls second computing device 220 via a telephone system to obtain, for example, current television broadcast schedules, programming and other operating information.

One path for communicating user-selected preference data from a user to the electronic system is via the remote controller 256. Remote control device 256 has a non-QWERTY keypad 260 and is communicatively coupled through a wireless link 255, for example to television 252. Keypad 260 is arranged and configured similar to a standard telephone keypad in one example implementation. The non-QWERTY keypad may include capability to communicate alpha-numeric information to television 252, either through multifunctional alpha-numeric keys, or via a combination of directional and select keys used to guide, then select alpha-numeric characters from a list displayed by television 252. Wireless link 255 may be implemented via one of many technologies, such as infra-red (IR) signal, the remote controller having an IR transmitting port 258, and television 252 having an IR receiving port 254. Television 252 communicates visually to a user, who in turn, responds by communicating to television 252 through the remote controller 256. Remote controller 256 has a display (not shown in FIG. 2) for communicating information back to a user according to another example implementation.

User-preference data for a television system includes the user's personal operating settings, such as those that define picture and sound characteristics, select available channels, and various recorder 280 instructions, such as start recording date/time, stop recording date/time, and channel to record. Generally, a user configures the television system with the user-preference data in order to attain greater utility from the television system. The television (electronic) system operates in accordance with the user-preference data.

Because entry of user-preference data is typically an infrequent activity, the keypad facilities dedicated to user-preference data entry are limited, and often cumbersome as described above for a portable telephone. Some television systems have simplified entry of commands, using entry of short keywords or codes to designate several operating commands. For example, entry of a program code published in a television guide, and associated with a particular television show, can start recording the channel broadcasting the show at the correct time and stop recording at the conclusion of the show, without the user having to explicitly specify the details of time and channel. However, even entering keyword/code data through the remote controller keypad can be laborious, slow and often, frustrating.

It is desirable to bypass, or eliminate, laborious entry of user-preference data through a keypad. According to an example embodiment of method , a user enters user-selected preference data into the first computing device, for example a personal computer, using a QWERTY keyboard having greater functionality and/or an easier mode of alpha-numeric character data entry than keypad 260. The user may generate an e-mail message containing the user-selected preference data, or access a web-based display and make HTTP-based selections, as described above for the portable telephone embodiment of the present invention. An electronic system identifier associated with the user-preference data is included with, or as part of, the user-selected preference data.

Assuming an e-mail based implementation of the present embodiment for illustration, the e-mail message containing the user-preference data and the electronic system identifier is subsequently sent to the second computing arrangement. The second computing device is adapted to function as an electronic mail destination, for example by executing an e-mail software application of a server computing arrangement. The electronic system identifier may be used to direct the e-mail to a particular e-mail destination address when each electronic system has a unique e-mail address at the second computing arrangement. According to another example implementation, all e-mail messages are designated to a common e-mail address, the electronic system identifier being automatically extracted from the e-mail message to further route the user-selected preference data. For example, the "subject" or "Re" portion of the e-mail message, or the first line of the body of the message, or some other predefined configuration may be used to associate the electronic system identifier and user-selected preference data communicated in the e-mail message with the appropriate electronic system.

According to one aspect of the present invention, each electronic system is predefined to be associated with a unique user identifier, and e-mail (or web-based data) associated with a particular user identifier is thereby associated with a particular associated electronic system. Electronic system identifiers include, for example, the telephone number of a portable telephone, a serial number of a particular device, or some other identifying designator unique to the equipment of the electronic system or service account.

The e-mail message contains user-selected preference data, for example, a electronic system configuration data (*e.g*., clock settings, feature selections, operating parameters, etc.) and/or Operating instructions *(e.g.,* recording instructions, keywords, codes, etc.). User-selected preference data may be delineated be keywords, format, or by other methods compatible with a particular electronic system. The e-mail message, or relevant contents thereof, is stored in database 230 after being received by server 226.

Second computing device 220 is communicatively coupled to electronic system 250 through a typical telephone system 275, for example. A temporary communication session is periodically established through telephone system 275, for example by the electronic system 250 calling second computing device 220. This temporary communication session may be specifically to request user-selected preference data, or for example, to periodically update electronic system's software, obtain TV broadcast schedules and associated keywords, etc. Accessing the downloading function of second computing device 220 initiates retrieval of the user-selected preference data from database 230 and transmission thereof (over the telephone system) to the electronic system 250. Once received, the user-selected preference data is used to program electronic system 250, for example by being stored in an appropriate memory.

The disclosures in United States patent application No. 10/078,618, from which this application claims priority, and in the abstract accompanying this application are incorporated herein by reference.

## Claims

1. A method for an electronic system user of programming an electronic system, including the steps of:
generating (110, 210) an electronic mail message in response to data entered by a user, the electronic mail message including user-selected preference data for the electronic system;
transmitting the electronic mail message to an electronic mail destination (126, 226);
automatically extracting (220, 120) the user-selected preference data from the electronic mail message;
transmitting (136, 236) the user-selected preference data to the electronic system; and
configuring the electronic system (150, 208) with the user-selected preference data.

2. A method as in claim 1, including transmitting the user-selected preference data to the electronic system in response to a request, initiated by the electronic system (150, 250), to transmit preference data.

3. A method as in claim 2, wherein the user-selected preference data includes telephone directory information, and the electronic system is a mobile communication device (150).

4. A method as in claim 2, wherein the user-selected preference data includes programming instructions, and the electronic system is a television signal recorder (280).

5. A method as in any preceding claim, including modifying operating parameters of the electronic system (150, 280) in response to the user-selected preference data.

6. A method as in any preceding claim, wherein transmitting the user-selected preference data to the electronic system (150, 280) is performed via a radio signal.

7. A method as in any preceding claim, wherein the electronic system includes a programmable recorder (280), and the user-selected preference data includes recording instructions.

8. A method of providing user-preference data to an electronic system, including the steps of:
transmitting user-preference data associated with the electronic system from a first computing arrangement (110, 210) to a second computing arrangement (120, 220) in response to user entry of the user-preference data at the first computing arrangement;
storing the user-preference data in a database (130, 230) hosted by the second computing arrangement in association with an identifier of the electronic system;
retrieving from the database user preference data associated with the identifier of electronic system in response to a request for the user-preference data by the electronic system (150, 250);
transmitting (136, 236) the user-preference data retrieved from the database to the electronic system; and
configuring the electronic system (150, 280) with the user-preference data.

9. An electronic system, including:
an electronic device (150, 280) configurable with user-preference data and coupled to a non-QWERTY user-input device for input of user-preference data;
a first computing arrangement (110) operable to assemble and transmit user-preference data;
a second computing arrangement (120, 220) coupled to the first computing arrangement and to the electronic device, the second computing arrangement operable to receive and store user-preference data transmitted from the first computing device and to transmit the user-preference data to the electronic device.

10. An electronic system, comprising:
means for generating (120, 220) an electronic mail message in response to data entered by a user, the electronic mail message including user-selected preference data for the electronic system;
means for transmitting (120, 220) the electronic mail message to an electronic mail destination (126, 226);
means for automatically extracting (126, 226) the user-selected preference data from the electronic mail message;
means for transmitting (136, 236) the user-selected preference data to the electronic system; and
means for configuring (150, 280) the electronic system with the user-selected preference data.
